# EUROPÄISCHE PATENTANMELDUNG

(11) **EP 0 775 844 A2**
(43) Veröffentlichungstag der Anmeldung: **28.05.1997**
(21) Anmeldenummer: 96100914.9
(22) Anmeldetag: 23.01.1996
(51) Int. Cl.: F16F 13/10

(54) **Lager**

(30) Priorität: 20.11.1995 DE 19543239
(71) Anmelder: WOCO Franz-Josef Wolf & Co., D-63628 Bad Soden-Salmünster (DE)
(72) Erfinder: Wolf, Franz Josef, D-63628 Bad Soden-Salmünster (DE); Nix, Stefan, D-63607 Wächtersbach-Aufenau (DE)
(74) Vertreter: Jaeger, Klaus, Dr.

(57) **Zusammenfassung**

Gegenstand der Erfindung ist ein Lager, insbesondere Motorlager, zum dämpfenden Lagern in unterschiedlichster Weise schwingender Massen. Das Lager besteht aus einem in einer Elastomerradialfeder über eine Gummi-Metall-Verbindung stoffschlüssig eingefügten Auflastanschlußstück, an dem neben der die radialen Schwingungskomponenten aufnehmenden Radialfeder zusätzlich und unabhängig von dieser eine Axialfeder zur Aufnahme sowohl der statischen als auch der axialen Komponenten der dynamischen Belastung angekoppelt ist. Beide Federn, sowohl die Radialfeder als auch die Axialfeder, sind an einem als Widerlager dienenden Lagergehäuse abgestützt. Die Axialfeder steht innerhalb einer hydraulischen Arbeitskammer, die im Lagergehäuse ausgebildet und von der Radialfeder begrenzt ist. Die Axialfeder ist ihrerseits als fluiddichte Balgfeder unter Bildung einer zweiten hydraulischen oder pneumatischen Arbeitskammer konfiguriert. Vorzugsweise ist das Arbeitsfluid dieser zweiten inneren Arbeitskammer über einen Kanal und einen Drucksender mit entsprechend ausgelegter Steuerung mit einem dynamischen Kraftprofil beaufschlagbar, das der auf das Lager einwirkenden dynamischen Belastung tilgend entgegengesetzt ist. Als Drucksender werden vorzugsweise Membrangeneratoren oder Festkörperschwinger eingesetzt. Das so aufgebaute Motorlager zeigt eine aktive Breitbandentkopplung und Breitbanddämpfung bei einer Baugröße, die weit unterhalb der für auch aktive konventionelle Hydrolager in Betracht gezogen werden muß.

## Beschreibung

Die Erfindung betrifft ein Lager zum dämpfenden Lagern schwingender Massen, wie es insbesondere im Kraftfahrzeugbau als Motorlager zum Lagern von Motoren und Antriebsaggregaten eingesetzt wird.

Lager dieser Art sind in der Regel Elastomer-Metall-Lager und bestehen typischerweise aus einem Auflastanschlußstück und einem Widerlager, das in der Regel als Lagergehäuse ausgebildet ist, und einem zwischen diesen beiden Teilen eingefügten Gummifederkörper. Dämpfende Lager dieser Art sind überwiegend als sogenannte Hydrolager ausgebildet, bei denen ein hydraulisches Arbeitsfluid in einer Arbeitskammer derart eingeschlossen ist, daß es bei zu dämpfender dynamischer Belastung des Lagers über einen drosselnden Überströmkanal in einer Ausweichkammer überströmen kann. Bei einer Lagerentlastung kann das Arbeistfluid in die Arbeitskammer rückströmen. Dabei wird zumindest ein Teil der Arbeitskammerwände durch die zumeist mehr oder weniger kegelmantelförmig ausgebildete Elastomertragfeder gebildet.

Das technische Dauerproblem bei Lagern dieser Art ist die fehlende Breitbandeffektivität der Entkopplung und Dämpfung zwischen Auflastanschlußstück und Widerlager unter dynamischer Stoß- und Schwingungsbelastung aus den unterschiedlichsten Quellen, die insbesondere im Kraftfahrzeugbau jedoch gleichzeitig auf das Lager einwirken.

So sieht sich ein Lagerfachmann, um ein Beispiel zu nennen, lediglich vor eine der Alltagsroutine entsprechende Aufgabe gestellt, wenn er ein solches Lager so abstimmen soll, daß z.B. die typischerweise im Bereich zwischen 5 und 10 Hz auftretenden niederfrequenten Motorschwingungen im Fluidlager optimal gedämpft werden sollen. Ein solcherart "optimiertes" Lager wird jedoch Körperschallschwingungen im typischerweise kritischen niederfrequenten akustischen Bereich von ungefähr 100 bis 300 Hz ebenso ungestört und ungedämpft vom Anschlußstück auf das Widerlager bzw. den Widerlageranschluß an der Karosserie übertragen wie fahrbahnverursachte energiereiche Stoßanregungen.

Aus der landläufigen Praxis sind tausende von Versuchen zur Verbesserung des Dämpfungs- und Entkopplungsverhaltens zwischen Anschlußstück und Widerlager von Fluidlagern der hier erörterten Art bekannt. Dabei kann allein dieser Umstand als sicheres Indiz dafür angesehen werden, daß das technische Problem einer Breitbandentkopplung und Breitbanddämpfung zwischen Auflastanschlußstück und Widerlagerstück eines Fluidlagers von einer grundlegenden Lösung noch weit entfernt ist.

Die hier gegenständliche Erfindung geht daher von dem technischen Problem aus, ein eine schwingende Masse dämpfend lagerndes Fluidlager, insbesondere ein Motorlager für den Kraftfahrzeugbau, zu schaffen, das bestimmungsgemäß auf das Lager einwirkende dynamische Belastungen sowohl nach Schwingungsart als auch nach Frequenz und Amplitude möglichst umfassend daran hindert, von einem der beiden Lageranschlüsse auf den jeweils anderen Lageranschluß überzugehen.

Zu diesem Zweck beschreibt die Erfindung ein Lager, das die im Patentanspruch 1 genannten Merkmale aufweist. Dabei werden in konsequenter Ausgestaltung dieses Lagers optimale Ergebnisse mit einem aktiven Lager mit den Merkmalen des Anspruchs 11 sowie insbesondere nach dem Verfahren gemäß Patentanspruch 12 erzielt.

Weitere Ausgestaltungen der Erfindung sind Gegenstand der Unteransprüche.

In seiner einfachsten Ausgestaltung stellt sich das Lager der Erfindung als Fluidlager, genauer als Elastomer-Fluidlager dar, bei dem die federnde Abstützung eines Auflagerstücks gegen ein insbesondere als Lagergehäuse ausgebildetes Widerlagerstück über zwei separat voneinander ausgebildete, aber zeitlich simultan und parallel zueinander wirkende Elastomerfedern, nämlich einer Radialfeder und einer Axialfeder, erfolgt. Die Bezeichnungen "Radialfeder" und "Axialfeder" beziehen sich dabei primär auf die Lage bzw. Ausrichtung Ihres Hauptfederkraftvektors und erst in zweiter Linie auf die geometrische Anordnung und Ausrichtung der Elastomerfederkörper selbst.

Um dies zu verdeutlichen sei an zahlreiche Federsysteme in napfförmigen oder becherförmigen Lagergehäusen erinnert, deren offene Stirnseite durch eine meist radial vorgespannte scheibenförmige Elastomerfeder verschlossen ist. Bei "radialer" Ausrichtung dieser Elastomerfeder, bezogen auf das Lagergehäuse und die Lasteinwirkung, ist diese Elastomerfeder von einem axial ausgerichteten, meist stabförmigen Lastaufnahme-Anschlußstück durchsetzt, und zwar unter meist stoffschlüssiger, formschlüssiger oder kraftschlüssiger Anbindung. Unter statischer oder dynamischer Belastung eines solchen Lagers in axialer Richtung wird die in radialer Richtung ausgerichtete Elastomerfeder stauchend auf Druck oder wölbend-dehnend auf Zug beansprucht. Trotz ihrer radialen Ausrichtung sind solche scheibenförmigen Elastomerfedern im Sinne der vorliegenden Erfindung hinsichtlich ihres Hauptvektors der wirksamen Federkraft "Axialfedern". Dabei wirken solche Federn zwar fraglos auch zentrierend, weisen aber kaum eine nutzbare Radialfederkomponente auf, da sie gerade in der Neutralebene, in der sie spannungsfrei vorliegen sollten, ihre maximale radiale Steifigkeit erreichen.

Im Gegensatz dazu ist das Lager der Erfindung vorzugsweise so ausgelegt, daß die Radialfeder in ihrer Neutrallage vorzugsweise vollkommen entspannt und unverformt vorliegt. Diese Bedingung kann dabei auch für größere statische Lasten durch eine entsprechend vorgespannte Axialfeder, die ja ebenso wie die Radialfeder am Auflastanschlußstück angreift, eingestellt werden.

Prinzipiell läßt sich also festhalten, daß im erfindungsgegenständlichen Fluidlager zwei Elastomerfedern oder Elastomerfedersysteme arbeiten, von denen eines der radialen Federung, das andere der axialen Federung der auf das Lager einwirkenden dynamischen Kräfte dienen. Dabei versteht sich von selbst, daß beispielsweise die Radialfeder nicht ausschließlich nur radiale Lastkomponenten, sondern in geringfügigem Anteil auch Axialkomponenten aufnehmen wird wie auch die Axialfeder nicht nur reine Axiallastkomponenten, sondern ebenso, wenn auch in untergeordnetem Umfang, radiale Lastkomponenten federnd aufnehmen wird.

Die Bezeichnungen "Fluid", "Fluidarbeitskammer" oder "Fluidlager" sind im gegebenen Zusammenhang bewußt so gewählt, daß die Lagerkonstruktion gemäß der Erfindung sowohl als pneumatisches oder teilpneumatisches Lager als auch als hydraulisches oder teilhydraulisches Lager, d.h. als Hydrolager oder Teilhydrolager, ausgebildet sein kann. Entscheidend ist die Ausbildung des Lagers gemäß der Erfindung als fluidbedämpftes Lager mit zwei voneinander separaten kooperativen Elastomerfederkörpern oder Elastomerfedersystemen, von denen eines als Radialfeder, das andere unabhängig von der Radialfeder und separat von dieser ausgebildet, zumindest funktionell separiert, eine Axialfeder ist oder als eine solche wirkt. Zumindest eine Wand einer der beiden Federn dient gleichzeitig als elastische Wand einer im Lager ausgebildeten Arbeitsfluidkammer.

In der Regel ist diese mindestens eine Arbeitsfluidkammer um die Axialfeder herum und mit der Radialfeder als elastische Arbeitskammerbegrenzungswand ausgestaltet.

Bei diesem Aufbau des Lagers weist die Radialfeder nach einer Ausgestaltung der Erfindung einen oder mehrere sich von der Lagerinnenseite her axial in die Radialfeder hineinerstreckende Sektoren oder Bohrungen auf, die außenseitig mit nur vergleichsweise dünnwandigen Elastomermembranen verschlossen sind. Diese Membranbereiche dienen als Blähbereiche für die fluidische, insbesondere hydraulische Entkopplung insbesondere höherfrequenter dynamischer Belastungen mit vergleichsweise kleinen Amplituden. Solche Schwingungen werden im dämpfenden Überströmkanal zur Ausgleichskammer hin nicht mehr entkoppelt. Vor allem wird aber durch diese Art der Entkopplung über Blähbereiche vorliegend erreicht, daß die Radialfederkonstanten der Radialfeder durch die fluidische, insbesondere sogar hydraulische Entkopplung unangetastet blieben, also keine axiale Verformung der Radialfeder stattfindet, die eine Feinabstimmung des Lagers in radialer Richtung dem Zufall und nicht mehr der konstruktiven Vorgabe überlassen würde.

Von besonderer Bedeutung ist bei einer Ausgestaltung der Erfindung die Ausbildung der Elastomer-Axialfeder als Balgfeder. Eine "Balgfeder" im vorstehend benutzten Sinne ist eine zylindrische oder zumindest im wesentlichen zylindrische oder auch mehr oder minder kugelförmige geschlossene Hohlfeder, die im einzelnen auch hyperboloidisch oder tonnenförmig bombiert, glattwandig oder auch gefaltet oder korrugiert ausgebildet sein kann. Der Vorteil solcher Balgfedern, insbesondere bei schwach konvex bombiert ausgebildeten Zylinderwänden liegt in einer fein abstimmbaren dabei aber gleichzeitig vergleichsweise großen axialen Tragfähigkeit bei sehr guter strukturbedingter radialer Festigkeit. Bei großen statischen Axiallasten werden dabei gute Ergebnisse auch dadurch erzielt, daß die axiale Hauptlast von einer innerhalb der Elastomerbalgfeder angeordneten Schraubenfeder aus Stahl aufgenommen wird. Die Balgfeder kann dann mit dünnerer Wandstärke ausgebildet werden und zur Feinabstimmung sowie zur zusätzlichen fluidischen Entkopplung und Dämpfung dienen.

Die Balgfeder ist nach einer Ausgestaltung der Erfindung vorzugsweise allseits fluiddicht geschlossen und kann so sowohl als selbstausgleichende Arbeitskammer als auch mit einer separat angeschlossenen Ausgleichskammer ausgebildet sein. Vorzugsweise ist ein fluidisches System der Balgfeder jedoch einkammrig ausgebildet.

Nach einer wesentlichen Ausgestaltung der Erfindung ist die als Axialfeder oder als Teil eines Axialfedersystems als geschlossene Fluidkammer ausgebildete Balgfeder mit einem Verbindungs- oder Anschlußkanal versehen, der den fluidischen Arbeitsraum der Balgfeder mit der Umgebung verbindet. Über einen solchen Verbindungskanal können die Federkenndaten der Axialfeder besonders einfach und schnell und mit nur minimaler Reaktionsverzögerung, der dynamischen Lagerbelastung entgegenwirkend, ausgleichend beeinflußt werden. Eine solche Aktivierung des Fluidsystems der Balgfeder kann beispielsweise durch eine physikalische Erhöhung oder Verminderung des hydraulischen Drucks des Arbeitsfluids der Balgfeder erfolgen, kann durch eine insbesondere elektrisch bewirkte Viskositätsänderung des Arbeitsfluids als auch in besonders einfacher und schnell ansprechender Weise durch eine unmittelbare und direkte "Beschallung" des Arbeitsfluids erfolgen.

Der Druck des Arbeitsfluids in der Balgfeder kann über den Verbindungskanal in prinzipiell beliebiger an sich bekannter Weise gesteuert werden, so beispielsweise über ein Steuerventil, über regelbare Pumpen, über Membranpumpen oder in einfachster Weise auch über einen Arbeitskolben.

Bei Verwendung eines elektro-viskoelastischen Arbeitsfluids kann durch Einwirken elektrischer Felder insbesondere in Verbindung mit Drosselkanälen oder Drosselöffnungen ebenfalls die Dämpfungscharakteristik der Axialfeder des Lagers vergleichsweise verzögerungsfrei verändert, insbesondere regelnd verändert werden.

Über einen Regelkreis, dessen Sensor den Verlauf der Amplitude der dynamischen Belastung des Lagers abtastet, kann nach den gennanten Verfahren, aber auch nach anderen entsprechenden Verfahren, die Axialfeder durch Druckbeaufschlagung, d.h. durch Beaufschlagung der Axialfeder mit einer Gegenkraft, so versteift werden, daß überdurchschnittliche in das Lager eingeleitete dynamische Belastungen durch die eingeleiteten Gegenkräfte aufgefangen, kompensiert, sozusagen "getilgt" werden.

Weitere Ausgestaltungen der Erfindung sind Gegenstand der Unteransprüche.

Die Erfindung ist im folgenden anhand von Ausführungsbeispielen in Verbindung mit den Zeichnungen näher erläutert. Es zeigen
- Fig. 1: im Axialschnitt und teilweise in funktionsschematischer Darstellung ein erstes Ausführungsbeispiel der Erfindung; und
- Fig. 2: in gleicher Darstellung ein zweites Ausführungsbeispiel der Erfindung.

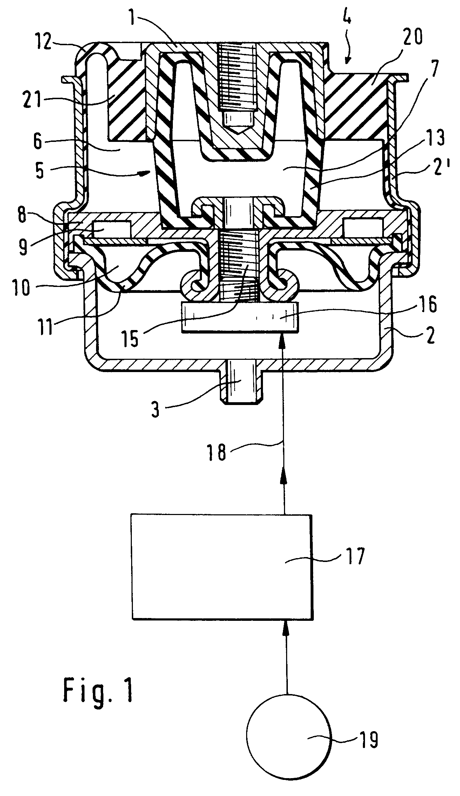

Das in der Fig. 1 gezeigte Lager besteht im wesentlichen aus einem Auflastanschlußstück 1, einem zweiteiligen Lagergehäuse 2,2'', das über einen Widerlageranschlußzapfen 3 auch die Funktion eines Widerlageranschlußstücks erfüllt, aus einer Elastomer-Radialfeder 4, sowie einer Elastomer-Axialfeder 5.

Das Lager weist eine erste fluidische Arbeitskammer 6 und eine zweite fluidische Arbeitskammer 7 auf.

Die erste Arbeitskammer 6 ist in einem zylindrischen Lagergehäuseaufsatzring 2'' ausgebildet und an der auflastseitigen Stirnseite durch die Elastomerradialfeder 4 sowie auf der widerlagerseitigen Stirnseite durch eine Widerlagerscheibe 8 begrenzt, die ihrerseits zwischen den beiden Lagergehäuseteilen 2,2'' fluiddicht eingespannt ist. Dabei ist in der in Fig. 1 gezeigten Weise einstückig mit der Elastomerradialfeder 4 eine durchgehende Innenwandgummierung des Lagergehäuseaufsatzringes 2' ausgebildet. Das Elastomer ist stoffschlüssig in das Metallteil anvulkanisiert. Ebenso ist das Auflastanschlußstück 1 stoffschlüssig in die Elastomerradialfeder 4 eingearbeitet.

In der Widerlagerscheibe 8 ist ein Überströmkanal 9 ausgebildet, der die erste Arbeitskammer 6 hydraulisch mit einer Ausgleichskammer 10 verbindet. Die Ausgleichskammer 10 ist widerlagerseitig von einer leicht verformbaren Ausgleichsmembran 11 begrenzt, die in das becherförmige Lagergehäusebodenteil 2 hinein frei expandieren kann.

Der Überströmkanal 9 und die Ausgleichskammer 10 dienen in üblicher Weise der Dämpfung von Lastwechseln mit großer Amplitude, die am Auflastanschlußstück 1 in die erste hydraulische Arbeitskammer 6 eingeleitet werden. Zur Dämpfung vergleichsweise höher frequenter Störschwingungen mit kleiner Amplitude dienen leicht verformbare dünnwandige Blähbereiche 12 der hydraulischen Entkopplung, die je nach den konstruktiven Anforderungen des speziellen Einsatzbereiches des Lagers in der Elastomerradialfeder 4 ausgebildet seien können. Bei dem in Fig. 1 gezeigten Auführungsbeispiel dienen Radialstege 20 der Radialführung der gelagerten Masse und werden die Blähbereiche 12 über Elastomeranschläge 21 bei radialer Stoßlast überbrückt.

Bei der in Fig. 1 dargestellten Ausgestaltung des Lagers der Erfindung ist die Axialfeder 5 eine Elastomerbalgfeder 13. Diese ist formschlüssig in eine bodenseitige profilierte Ausnehmung des Anschlußstücks 1 eingesetzt und auf ihrem gegenüberliegenden widerlagerseitigen Ende fluiddicht kraft- und formschlüssig auf der Widerlagerscheibe fixiert. Der so fluiddicht abgeschlossene Innenraum der Balgfeder dient als zweite Arbeitskammer 7 für ein zweites Arbeitsfluidsystem. Dabei sind die Wände der Balgfeder 13 vergleichsweise dünn und leicht verformbar ausgebildet, so daß sich durch eine dynamische Belastung des Lagers verursachte Volumenänderungen durch eine Verformung der Elastomerbalgfeder 13 in die erste Arbeitskammer 6 hinein ausgleichen können.

Die zweite Arbeitskammer 7 kann sowohl als pneumatische Feder als auch in Form einer hydraulisch gedämpften Feder ausgebildet sein. Bei der Konfiguration der Axialfeder wird sich der Fachmann in an sich bekannter Weise nach dem Anforderungsprofil des für das Lager vorgesehenen Einsatzgebietes richten.

Bei dem in Fig. 1 gezeigten Ausführungsbeispiel ist die zweite fludische Arbeitskammer 7, eine hydraulische Arbeitskammer, mit einem Kanal 15 verbunden, der sich durch die Widerlagerscheibe 8 hindurch und durch die Ausgleichskammer 10 sowie durch die Ausgleichsmembran 11 hindurch in das Bodenteil 2 des Lagergehäuses hinein erstreckt. An der widerlagerseitigen Öffnung des Kanals 15 kann beispielsweise eine Versorgungsleitung angeschlossen sein, die der Drucksteuerung des Arbeitsgebiets in der zweiten Arbeitskammer 7 von einem externen Fluidreservoir und einer externen Pumpe her ermöglicht. Gleichermaßen können durch diesen Kanal auch elektrische Zuführungen verlaufen, die, bei entsprechender Auslegung des Lagers, in ebenfalls an sich bekannter Weise einer elektrischen Viskositätsbeeinflussung eines hydraulischen Arbeitsfluids dienen können.

In dem in Fig. 1 gezeigten Ausführungsbeispiel ist die widerlagerseitige Öffnung des Kanals 15 schematisch durch einen die Kanalöffnung fluiddicht abschließenden Drucksender 16 überdeckt. "Drucksender" kann dabei jede beliebige an sich bekannte Vorrichtung sein, die einem Arbeitsfluid, insbesondere einem hydraulischen Arbeitsfluid, einen Druck aufprägen kann, sei dies in Form einer Stoßdruckwelle oder einer Schwingung. Konstruktiv kann ein solcher Drucksender beispielsweise als flexible Steuermembran, als Halbleiterwandler, oder lediglich als Kolben ausgebildet sein, der in dem als mit diesem zusammenwirkenden Arbeitszylinder ausgelegten Kanalabschnitt gleitend gelagert ist.

Dieser Drucksender 16 ist seinerseits durch eine externe Steuerung 17 ansteuerbar, die über eine Steuerleitung 18 mit dem Drucksender 16 verbunden ist. Die Steuerung 17 ihrerseits wird von Sensoren (19) beaufschlagt, die die in das Lager eingeleiteten oder bei Früherkennung die auf das Lager zukommenden dynamischen Belastungen frühzeitig abtasten. Dadurch wird in der Steuerung eine diesen Belastungen entgegengerichtete Kraftkomponente im Drucksender erzeugt, und von diesem in das Arbeitsfluid in der zweiten Arbeitskammer 7 so eingeleitet, daß die auf das Lager einwirkenden dynamischen Belastungen kompensiert, gleichsam getilgt werden.

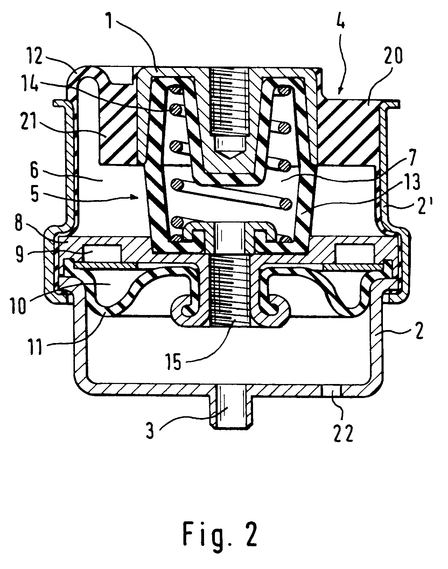

Ein weiteres Ausführungsbeispiel der Erfindung ist in der Fig. 2 gezeigt. In seinem Grundkonzept entspricht das Lager der Fig. 2 dem in Fig. 1 gezeigten Lager, so daß auch in Fig. 2 die bereits in Fig. 1 verwendeten und dort auch beschriebenen Bezugszeichen benutzt werden.

Während in der Fig. 1 die Axialfeder 5 nur ein einziges Federelement, nämlich eine Balgfeder, aufweist, bzw. aus einem solchen besteht, besteht das nach dem in Fig. 2 gezeigten Ausführungsbeispiel gezeigte System der Axialfeder 5 aus zwei Federelementen, nämlich aus dem in Fig. 1 gezeigten Balgfeder 13 und einer in dieser Balgfeder angeordneten Schraubenfeder 14 aus Federstahl. Die Elastomerbalgfeder 13 ist formschlüssig in eine bodenseitige profilierte Ausnehmung des Anschlußstücks 1 eingesetzt, und zwar so, daß die Balgfeder zum Anschlußstück zur Bildung eines formschlüssigen Paßsitzes komplementär konfiguriert ist. Auf ihrem gegenüberliegenden, widerlagerseitigen Ende ist die Balgfeder fluiddicht kraft- und formschlüssig auf der Widerlagerscheibe 8 fixiert. Innerhalb der so fluiddicht abgeschlossenen Balgfeder ist die Federstahl-Schraubenfeder 14 zwischen dem Auflager-Anschlußstück 1 und der Widerlagerscheibe 8 eingespannt.

In dem in Fig. 2 gezeigten Ausführungsbeispiel des Lagers der Erfindung ist die zweite Arbeitskammer 7 so ausgelegt, daß sie mit Umgebungsluft als zweitem Arbeitsfluid arbeitet. Der Druckausgleich ist dabei über eine oder mehrere Öffnungen 22 im Lagerbodenteil 2 und den sich in die Umgebung öffnenden Verbindungskanal 15' hergestellt. In dieser Ausgestaltung ist das in Fig. 2 gezeigte Lager durch das Fehlen der gesamten elektronischen Steuerung und Regelung für das innere Fluidsystem der Balgfeder deutlich preisgünstiger als das in Fig. 1 gezeigte aufwendige und bessere System.

Das in Fig. 2 gezeigte Lager ist also hinsichtlich der Dämpfung dadurch charakterisiert, daß es in der Arbeitskammer 6 mit einem hydraulischen Fluid und in der inneren Arbeitskammer 7 in der Balgfeder mit einem pneumatischen Arbeitsfluid, hier Umgebungsluft, arbeitet.

Die in den Fig. 1 und 2 dargestellten Varianten des Lagers sind je nach den Anforderungen des Anwendungsbereichs, in dem das Lager eingesetzt werden soll, auch im Sinne einer Anpassung der Lagerdaten an den Einsatzzweck, in ihren einzelnen Bauelementen vertauschbar. So kann beispielsweise das Lager der Fig. 1 mit der Balgfeder als Axialfeder 5 zusätzlich mit einer Schraubenfeder oder einer inneren tragenden zusätzlichen Gummifeder, insbesondere einem mit Formblechen versteiften Gummifederpuffer, ausgestattet sein. In gleicher Weise kann das in Fig. 2 gezeigte Lager mit seiner pneumatisch dämpfenden inneren Arbeitskammer 7 im Axialfedersystem 5 als reine Balgfeder ohne Unterstützung einer Stahlschraubenfeder ausgebildet sein.

Alle diese Ausgestaltungen und Varianten der in den Fig. 1 und 2 gezeigten Lager zeichnen sich durch eine besonders geringe erforderliche Bauhöhe und durch große Kompaktheit in den Abmessungen aus. Sie ermöglichen insbesondere auch in ihren ungeregelten passiven Bauvarianten bereits eine Breitbandentkopplung zwischen dem Auflastanschlußstück 1 und dem Widerlageranschlußzapfen 3, die die wesentlich größeren leistungsgleichen reinen Hydrolager nach dem Stand der Technik wegen ihrer steiferen, also Körperschall besser leitenden Federsysteme leisten können.

Die hier beigefügte Zusammenfassung der Erfindung ist integrierter Bestandteil der hier vorgelegten Offenbarung der Erfindung.

Auf diese Weise wird ein aktives und im weiten Frequenzbereich sowie im Stoßbereich dämpfendes Lager geschaffen, das speziell durch die kombinierte Verwendung der Elastomerbalgfeder und kombiniert mit dieser, der Federstahlschraubenfeder ungewöhnlich klein dimensioniert werden kann.

## Patentansprüche

1. Lager, insbesondere Motorlager, zum dämpfenden Lagern schwingender Massen, bestehend aus einem Auflastanschlußstück (1), an dem eine Elastomer-Radialfeder (4) und eine separate Elastomer-Axialfeder (5) lastaufnehmend angreifen, die an einem diesbezüglich als Widerlager dienenden Lagergehäuse (2,2') abgestützt sind, und mindestens einer im Lagergehäuse ausgebildeten Fluidarbeitskammer (6;7) mit mindestens einem Wandbereich, der von mindestens einer der beiden Elastomerfedern (4;5) gebildet ist.

2. Lager nach Anspruch 1,
**gekennzeichnet** durch
eine das Lagergehäuse lastaufnahmeseitig in der Radialebene verschliessende scheibenförmige Elastomer-Radialfeder (4), in der das Auflastanschlußstück (1) stoffschlüssig eingebunden ist.

3. Lager nach Anspruch 2,
**gekennzeichnet** durch
einen leicht verformbaren dünnwandigen Blähbereich (12) in der Radialfeder (4).

4. Lager nach einem der Ansprüche 1 bis 3,
**gekennzeichnet** durch
eine Elastomerbalg-Axialfeder (13).

5. Lager nach Anspruch 3,
**gekennzeichnet** durch
eine Elastomer-Balgfeder (13) mit zylindrischer oder bombiert zylindrischer axialer Außenwand.

6. Lager nach einem der Ansprüche 4 oder 5,
**gekennzeichnet** durch
eine allseits fluiddicht geschlossene, erforderlichenfalls lediglich ein oder zwei Befüllungs-, Ausgleichs-, Aktivierungs - oder Belüftungsöffnungen für ein hydraulisches oder pneumatisches Arbeitsfluid aufweisende Elastomer-Balgfeder (13) als Axialfeder (5).

7. Lager nach einem der Ansprüche 1 bis 6,
**gekennzeichnet** durch
ein im Lagergehäuse abgestütztes Widerlagerstück (8) und eine Axialfeder (5), die innerhalb einer aussen umgebenden Arbeitskammer (6) für ein Dämpfungsfluid zwischen dem Anschlußstück (1) und dem Widerlagerstück (8) kraftschlüssig eingefügt ist.

8. Lager nach Anspruch 7,
**gekennzeichnet** durch
ein Widerlagerstück (8), dessen auflastseitige Oberfläche eine der Begrenzungswände der Arbeitskammer (6) und deren gegenüberliegende widerlagerseitige Oberfläche eine der Begrenzungswände einer eine leicht verformbare Membran (11) als Wandungsabschnitt enthaltenden Dämpfungsfluid-Ausgleichkammer (10) bildet, und in der ein dämpfender Überströmkanal (9) ausgebildet ist, der beide Kammern (6,11) miteinander verbindet.

9. Lager nach einem der Ansprüche 4 bis 8,
**gekennzeichnet** durch
eine Schraubenfeder (14) aus Stahl, die in der Elastomer-Balgfeder (13) kraftschlüssig zwischen Auflastanschlußstück (1) und Widerlagerstück (2) eingefügt ist.

10. Lager nach einem der Ansprüche 4 bis 9,
**gekennzeichnet** durch
einen den Innenraum der Balgfeder (13) mit der Umgebung verbindenden Verbindungskanal (15), durch den hindurch die Balgfeder über ihr fluides Arbeitsmedium mit stoss- und schwingungsdämpfenden Gegenkräften in Form von Druckstössen oder -schwingungen beaufschlagbar ist.

11. Lager nach Anspruch 10,
**gekennzeichnet** durch
einen ausserhalb der Balgfeder (13) an den Verbindungskanal (15) für das Arbeitsfluid angekoppelten und in dieses Arbeitsfluid hinein abstrahlenden Drucksender (16), der von einem Steuerglied (17) nach Massgabe der aktuellen operationsbedingten Belastung des Lagers beaufschlagbar ist.

12. Verfahren zum Dämpfen und Tilgen von Stössen und Schwingungen in einem dynamisch belasteten pneumatischen Lager oder in einem dynamisch belasteten Hydrolager,
dadurch **gekennzeichnet**,
dass dem Arbeitsfluid des Lagers in zumindest einer der gegebenenfalls mehreren Arbeitskammern nach Massgabe der Ist-Zeit-Operationsparameter des dynamisch belasteten Lagers der aktuellen Belastung entgegenwirkende Kräfte, in der Regel in Form von Stössen oder Schwingungen, aufgeprägt werden.
